# EUROPÄISCHE PATENTANMELDUNG

(11) **EP 2 953 247 A1**
(43) Veröffentlichungstag der Anmeldung: **09.12.2015**
(21) Anmeldenummer: 15169403.1
(22) Anmeldetag: 27.05.2015
(51) Int. Cl.: H02M 1/44, H02M 3/155, G01D 21/00, G01F 23/284

(54) **FELDGERÄT MIT EINER SCHALTWANDLERSCHALTUNG**

(30) Priorität: 05.06.2014 DE 102014107991
(71) Anmelder: Krohne Messtechnik GmbH, 47058 Duisburg (DE)
(72) Erfinder: Gerding, Michael, 44805 Bochum (DE); Ouzounis, Charalambos, 44805 Bochum (DE); Kaluza, Olaf, 45699 Herten (DE)
(74) Vertreter: Gesthuysen Patent- und Rechtsanwälte

(57) **Zusammenfassung**

Beschrieben und dargestellt ist ein Feldgerät (1) mit einer Schaltwandlerschaltung (2) und mit einer Messschaltung (3) zur Bestimmung mindestens einer Messgröße, wobei die Schaltwandlerschaltung (2) eingangsseitig mit elektrischer Leistung gespeist ist und die Schaltwandlerschaltung (2) ausgangsseitig mit der Messschaltung (3) verbunden ist und die Schaltwandlerschaltung (2) die Messschaltung (3) mit elektrischer Leistung versorgt,

Die Problematik einer veränderlichen Störsignaleinstreuung durch die Schaltwandlerschaltung wird reduziert, indem eine Lastschaltung (5) von einer Laststeuerschaltung (6) so angesteuert ist, dass die ausgangsseitige elektrische Last an der Schaltwandlerschaltung (2) eine elektrische Mindestlast nicht unterschreitet.

## Beschreibung

Die Erfindung betrifft ein Feldgerät mit wenigstens einer Schaltwandlerschaltung und mit wenigstens einer Messschaltung zur Bestimmung mindestens einer Messgröße, wobei die Schaltwandlerschaltung eingangsseitig mit elektrischer Leistung gespeist ist und die Schaltwandlerschaltung ausgangsseitig mit der Messschaltung verbunden ist und die Schaltwandlerschaltung die Messschaltung mit elektrischer Leistung versorgt.

Feldgeräte der vorgenannten Art sind in der Prozessautomatisierung seit langem bekannt und werden aufgrund ihrer Fähigkeit, eine Messgröße oder auch mehrere Messgrößen zu bestimmen, dazu verwendet, Prozesse und in den Prozessen geführte Medien zu überwachen. Derartige Feldgeräte sind beispielsweise dazu eingerichtet, den Durchfluss eines fließfähigen Mediums durch Rohre oder Kanäle zu ermitteln, indem beispielsweise Messgeräte zur Anwendung kommen, die nach dem Coriolis- oder Vortex-Verfahren arbeiten, bei denen Ultraschallsignale verwendet werden oder die den Durchfluss kalorimetrisch ermitteln. Andere gattungsgemäße Feldgeräte können für die Bestimmung des Füllstands eines Mediums ausgestaltet sein, wobei das Medium beispielsweise eine Flüssigkeit oder auch ein Schüttgut sein kann. Dabei ist es im Stand der Technik bekannt, die Laufzeit von elektromagnetischen Signalen nach dem Radar- oder speziell dem TDR-Verfahren auszuwerten. Auch kann der Doppler-Effekt zur Anwendung gelangen oder Lote benutzt werden. Weiterhin gibt es Vielzahl von Feldgeräten, um das Erreichen von Füllständen kapazitiv, induktiv oder durch mechanisch schwingfähige Elemente zu erkennen. Andere mit einer Messschaltung ausgestattete Feldgeräte dienen der Erfassung eines pH-Wertes, der Temperatur, der Viskosität oder einer elektrischen Leitfähigkeit des interessierenden Mediums im Prozess. Auf die mit der Messschaltung des Feldgerätes erfasste oder bestimmte Messgröße kommt es im Einzelnen nicht an, die nachfolgend erläuterte Erfindung ist vielmehr anwendbar auf alle Feldgeräte mit einer Schaltwandlerschaltung und mit einer Messschaltung.

Die in dem Feldgerät vorgesehene Schaltwandlerschaltung dient im Wesentlichen der Energieversorgung der Messschaltung, wobei die Schaltwandlerschaltung dazu eingesetzt wird, ausgangsseitig eine definierte Spannungmeist Gleichspannung - bereitzustellen, die die Messschaltung für einen ordnungsgemäßen Betrieb benötigt. Messschaltungen dienen oft nicht nur der Erfassung einer Rohmessgröße, sondern auch der Signalaufbereitung, - filterung, -anpassung und -konvertierung.

Schaltwandler, die häufig auch als Schaltregler bezeichnet werden, beruhen auf dem Prinzip wenigstens eines getaktet beschalteten Energiespeichers. So ist es beispielsweise möglich, durch die getaktete Unterbrechung des Strompfades mit einer Spule als Energiespeicher und nachfolgender Glättung der so erzeugten Spannungsspitzen auch eine eingangsseitige Gleichspannung hoch zu transformieren. Es sind ganz unterschiedliche Arten von Schaltwandlern bekannt, Abwärtswandler, die zuvor beschriebenen Aufwärtswandler und Inverswandler, die ausgangsseitig sowohl höhere als auch niedrigere (invertierte) Spannungen ausgangsseitig bereitstellen können als diejenige Spannung, die eingangsseitig am Schaltwandler bereitgestellt wird.

Schaltwandlerschaltungen sind in modernen Feldgeräten zumeist nicht mehr diskret aufgebaut, vielmehr werden speziell zur Implementierung von Schaltwandlerschaltungen vorgesehene Halbleiterbauelemente eingesetzt, die je nach Verwendungszweck mit einer externen Beschaltung ausgestattet werden. Die externe Beschaltung umfasst zumeist den immer erforderlichen elektrischen Energiespeicher - meist in Form einer Spule - und andere Schaltungsteile wie Rückkoppelnetzwerke und Filterschaltungen. In Abhängigkeit von Eingangsspannungen und -strömen, von der ausgangsseitigen Last der Schaltwandlerschaltung und den entsprechend gewünschten Ausgangsspannungen und -strömen werden diese Schaltungsteile häufig nach Angaben der Hersteller der Halbleiterbausteine dimensioniert, um die Schaltwandlerschaltung insgesamt in den für den Anwendungsfall günstigsten Arbeitspunkt zu betreiben.

Aufgrund der getakteten Betriebsweise sendet die Schaltwandlerschaltung Störsignale aus, die beispielsweise die ausgangsseitig angeschlossene Messschaltung in ungewünschter Weise beeinflussen. Besonders problematisch ist das Auftreten verschiedenartiger und sich zeitlich verändernder Störungen, da auf diese schaltungstechnisch nur schlecht reagiert werden kann.

Aufgabe der vorliegenden Erfindung ist es, ein Feldgerät mit einer Schaltwandlerschaltung anzugeben, bei dem die Problematik veränderlicher Störsignaleinstreuungen durch die Schaltwandlerschaltung reduziert ist.

Erfindungsgemäß ist erkannt worden, dass ein besonderes Problem darin liegt, wenn die für einen bestimmten Arbeitspunkt und für eine bestimmte ausgangsseitig entnommene Leistung ausgelegte Schaltwandlerschaltung in abweichenden Arbeitspunkten betrieben wird, beispielsweise weil die Leistungsaufnahme der an die Schaltwandlerschaltung angeschlossenen Messschaltung variiert. Dies kann beispielsweise dann der Fall sein, wenn die Messschaltung verschiedene Betriebsmodi aufweist, die wechselnd auftreten. Die zuvor aufgezeigte und hergeleitete Aufgabe wird bei dem eingangs beschriebenen Feldgerät mit einer Schaltwandlerschaltung dadurch gelöst, dass eine Lastschaltung von einer Laststeuerschaltung so angesteuert ist, dass die ausgangsseitige elektrische Last an der Schaltwandlerschaltung eine elektrische Mindestlast nicht unterschreitet.

Die grundlegende Idee zu der erfindungsgemäßen Maßnahme, eine zusätzliche Lastschaltung vorzusehen besteht darin, dass die Schaltwandlerschaltung zunächst ausgelegt ist für den Betriebsfall, dass die Messschaltung eine vergleichsweise hohe Leistungsaufnahme hat. Für diesen Fall ist die Schaltwandlerschaltung so ausgelegt, dass mögliche einstreuende Störungen durch schaltungstechnische Maßnahmen, wie beispielsweise Filterschaltungen, unterdrückt sind. Ein Absinken der Leistungsaufnahme durch die Messschaltung verschiebt den Arbeitspunkt, mit dem die Schaltwandlerschaltung betrieben wird, wodurch sich insbesondere die getaktete Ansteuerung innerhalb des Schaltwandlers ändert. Zunächst ändert sich das Tastverhältnis von pulsweitenmodulierten Signalen (PWM-Signalen). Bei sehr niedriger Leistungsaufnahme kann es sogar dazu kommen, dass in der Schaltwandlerschaltung ganze Taktzyklen ausgesetzt werden, was häufig als "Burst-Modus" bezeichnet wird gegenüber dem durchgängig getakteten Modus, der auch als "PWM-Modus" bei einigen Schaltwandlerschaltungen bezeichnet wird.

Dadurch, dass die Lastschaltung von der Laststeuerschaltung so angesteuert ist, dass die ausgangsseitige elektrische Last an der Schaltwandlerschaltung unter eine bestimmte Grenze nicht absinken kann, diese nämlich nicht unter eine elektrische Mindestlast fällt, wird verhindert, dass das Betriebsverhalten der Schaltwandlerschaltung starken Schwankungen unterworfen ist. Der Arbeitspunkt der Schaltwandlerschaltung variiert nur noch in einem ganz geringen Umfang oder ggf. auch überhaupt nicht, wenn die zusätzliche Lastschaltung von der Laststeuerschaltung so angesteuert wird, dass immer die für die Schaltungsauslegung herangezogene hohe Last an der Schaltwandlerschaltung anliegt.

Gemäß einer besonders vorteilhaften Ausgestaltung ist vorgesehen, dass die elektrische Mindestlast so groß ist, dass die Schaltwandlerschaltung durchgehend im PWM-Betriebsmodus arbeitet, insbesondere ein Burst-Betriebsmodus der Schaltwandlerschaltung vermieden wird. Die Angabe, bei welcher elektrischen Last am Ausgang der Schaltwandlerschaltung die zentrale Steuerung des Schaltwandlers von dem regelmäßig getakteten PWM-Betriebsmodus in den zuvor beschriebenen Burst-Betriebsmodus überwechselt, kann entweder dem Datenblatt des Herstellers der Schaltwandlerschaltung bzw. des in der Schaltwandlerschaltung an zentraler Stelle vorgesehenen Schaltwandler-Halbleiterbausteins entnommen werden, ggf. kann die Leistungsgrenze, bei der eine Umschaltung zwischen den beiden Betriebsmodi erfolgt, auch durch Messung herausgefunden werden.

Während die Schaltwandlerschaltung, so lange sie im regelmäßig getakteten PWM-Betriebsmodus verbleibt, sich also nur das Taktverhältnis des steuernden PWM-Signals verändert, eine verhältnismäßig gleichbleibende Störsignaleinstreuung hervorruft, werden die Störungen beim Übergang in den Burst-Betriebsmodus und bei fortwährendem Betrieb im Burst-Betriebsmodus veränderlich, insbesondere verschieben sich die Frequenzanteile der Störungen und ggf. werden die Störungen insgesamt breitbandiger, was es zu vermeiden gilt.

Bevorzugt ist das Feldgerät mit seiner Lastschaltung so ausgelegt, dass die elektrische Mindestlast in etwa der maximalen Last der Messschaltung entspricht, insbesondere der maximalen Last der Messschaltung im Normmessbetrieb der Messschaltung entspricht. Mit Normmessbetrieb ist der reguläre Messbetrieb des Feldgeräts bei aktiver Messschaltung gemeint, insbesondere ist nicht gemeint beispielsweise das Hochfahren des Feldgeräts bei der Erstinbetriebnahme oder beispielsweise bei einem Reset oder bei fehlerbedingtem Neustart des Feldgeräts.

In einer Ausgestaltung der Erfindung ist vorgesehen, dass die Lastschaltung parallel zur Messschaltung geschaltet ist, in einer anderen Ausgestaltung der Erfindung ist vorgesehen, dass die Lastschaltung als Teil der Messschaltung realisiert ist. In beiden Fällen ist die Lastschaltung jedenfalls so ausgelegt, dass sie die von der Schaltwandlerschaltung ausgangsseitig zur Verfügung gestellte elektrische Last zumindest auf die elektrische Mindestlast anhebt, sofern der alleinige Betrieb der Messschaltung nicht mehr ausreicht, diese Mindestlast ausgangsseitig an der Schaltwandlerschaltung abzunehmen.

In einer besonders einfachen Ausgestaltung des Feldgeräts ist vorgesehen, dass die Lastschaltung einen Schalter aufweist, der durch die Laststeuerschaltung schaltbar ist. Über den Schalter wird ein Strompfad geschlossen, in dem eine solche Leistung verbraucht wird, dass die erforderliche Mindestlast an der Schaltwandlerschaltung nicht unterschritten wird. Es sind mehrere solcher geschalteter Strompfade denkbar, mit denen verschiedene zusätzliche Lasten hinzugeschaltet werden können.

Gemäß einer anderen Variante des erfindungsgemäßen Feldgeräts ist vorgesehen, dass die Lastschaltung wenigstens ein Transistor umfasst, der von der Laststeuerschaltung angesteuert wird. So lässt sich auch eine variable zusätzliche Last an der Schaltwandlerschaltung realisieren, so dass der Arbeitspunkt der Schaltwandlerschaltung sehr genau konstant gehalten werden kann, konstant auf der Mindestlast oder auch konstant über der Mindestlast.

Bei einer vorteilhaften Weiterentwicklung ist vorgesehen, dass die Lastschaltung und die Laststeuerschaltung unter Verwendung wenigstens eines Mikrocontrollers realisiert sind, wobei elektrische Leistung durch Ansteuerung wenigstens eines I/O-Ports des Mikrocontrollers verbraucht wird. Der I/O-Port des Mikrocontrollers kann beispielsweise über einen elektrischen Widerstand einen Strom gegen Masse treiben und so für den zusätzlichen Leistungsverbrauch sorgen. Der Vorteil dieser Variante ist, dass hierzu beispielsweise ein Mikrocontroller verwendet werden kann, der bereits in der Messschaltung des Feldgeräts vorgesehen ist.

Eine vorteilhafte Ausgestaltung des Feldgeräts zeichnet sich dadurch aus, dass die Laststeuerschaltung die Lastschaltung in Abhängigkeit von einem Betriebsmodus der Messschaltung ansteuert. Es wird hier also nicht genau messtechnisch erfasst, wie hoch die Leistungsaufnahme der Messschaltung ist, es wird vielmehr lediglich festgestellt, in welchem Betriebsmodus sich die Messschaltung befindet, da dies häufig ein hinreichender Hinweis auf die Leistungsaufnahme durch die Messschaltung ist.

Bei dem Feldgerät kann es sich beispielsweise um ein Radarmessgerät zur Entfernungsmessung handeln. Das betrachtete Feldgerät weist wenigstens einen ersten Betriebsmodus zum Emittieren und Empfangen von HF-Strahlung sowie zum Digitalisieren und Abspeichern der emittierten und empfangenen HF-Strahlung auf. Zudem weist das betrachtete Feldgerät einen zweiten Betriebsmodus auf, der der Auswertung der abgespeicherten digitalisierten emittierten und empfangenen HF-Strahlung dient. Bei derartigen als Radarmessgerät ausgestalteten Feldgeräten besteht oft eine höhere elektrische leistungsmäßige Belastung im zweiten Betriebsmodus im Vergleich zum ersten Betriebsmodus. Bei einem solchen Feldgerät ist dann erfindungsgemäß vorgesehen, dass die Laststeuerschaltung die Lastschaltung im ersten Betriebsmodus ansteuert und damit zuschaltet, so dass auch im ersten Betriebsmodus eine Belastung für die Schaltwandlerschaltung auftritt, wie sie im zweiten Betriebsmodus ohne zusätzliche Zuschaltung der Lastschaltung auftritt.

Bei einer Weiterentwicklung des Feldgeräts ist vorgesehen, dass die ausgangsseitige elektrische Last an der Schaltwandlerschaltung durch Erfassung wenigstens einer elektrischen Kenngröße von der Laststeuerschaltung ermittelt wird und in Abhängigkeit von der ermittelten elektrischen Last die Lastschaltung von der Laststeuerschaltung angesteuert wird. Bevorzugt ist vorgesehen, dass die wenigstens eine elektrische Kenngröße der von der Schaltwandlerschaltung insgesamt getriebene ausgangsseitige Strom ist, da bei fest eingestellter ausgangsseitiger Spannung der Schaltwandlerschaltung so insgesamt die Leistungsabgabe und die Leistungsentnahme bestimmt werden kann. Bei einer derartigen direkten messtechnischen Bestimmung der entnommenen Leistung lässt sich über die Lastschaltung und die Laststeuerschaltung praktisch eine beliebig feine Leistungsregelung realisieren.

Im Einzelnen gibt es nun eine Vielzahl von Möglichkeiten, das erfindungsgemäße Feldgerät auszugestalten und weiterzubilden. Dazu wird verweisen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: ein Feldgerät mit einer Schaltwandlerschaltung, wobei die Lastschaltung außerhalb der Messschaltung und die Laststeuerschaltung im Rahmen der Messschaltung realisiert ist,
- Fig. 2a, 2b, 2c: verschiedene Möglichkeiten der Realisierung der Lastschaltung,
- Fig. 3: ein als Zwei-Leiter-Gerät ausgestaltetes Feldgerät, bei dem Lastschaltung und die Laststeuerschaltung außerhalb der Messschaltung realisiert sind,
- Fig. 4: ein Feldgerät, bei dem die Lastschaltung und die Laststeuerschaltung vollständig innerhalb der Messschaltung realisiert sind,
- Fig. 5: das Feldgerät gemäß Fig. 4, bei dem die Laststeuerschaltung im Rahmen eines Mikrocontrollers der Messschaltung realisiert ist,
- Fig. 6: ein Feldgerät, bei dem die von der Schaltwandlerschaltung entnommene Leistung durch Messung und zur Leistungsregelung ermittelt wird und
- Fig. 7: ein Diagramm zur Darstellung der Leistungssteuerung durch Lastschaltung und Laststeuerschaltung in verschiedenen Betriebsmodi eines Feldgeräts.

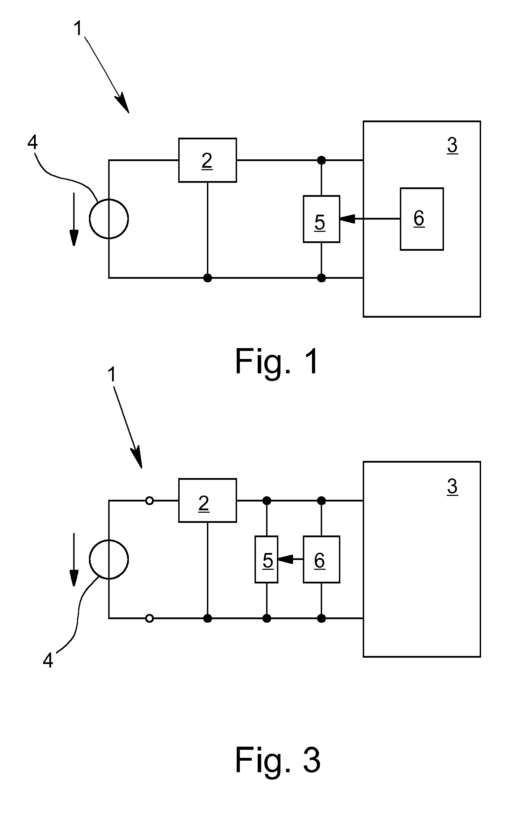

In den Fig. 1 und 3 bis 6 sind jeweils dargestellt ein Feldgerät 1 mit einer Schaltwandlerschaltung 2 und mit einer Messschaltung 3 zur Bestimmung einer Messgröße.

Das Feldgerät 1 wird über eine Spannungsquelle 4 mit elektrischer Leistung versorgt, wobei die Spannungsquelle 4 die Schaltwandlerschaltung 2 eingangsseitig mit elektrischer Leistung speist.

In den Fig. 1 und 4 bis 6 gehört die Spannungsquelle 4 mit zu dem Feldgerät 1. Bei dem Feldgerät gemäß Fig. 3 handelt es hingegen um ein Zwei-Leiter-Feldgerät, das also von einer externen Spannungsquelle 4 mit Leistung versorgt wird und den ermittelten Messwert kodiert über den Strom der Zwei-Leiter-Stromschleife ausgibt (4 mA - 20 mA-Schnittstelle). Die Spannungsquelle 4 gehört hier also nicht mit zum Feldgerät 1. Es kommt vorliegend nicht darauf an, ob die Spannungsquelle 4 unmittelbar eingangsseitig mit der Schaltwandlerschaltung 2 verbunden ist oder über möglicherweise zusätzlich vorgesehene elektrische Netzwerke, es ist jedoch in allen Fällen so, dass die Spannungsquelle 4 die Schaltwandlerschaltung 2 eingangsseitig - mittelbar oder unmittelbar - leistungsmäßig speist.

Aus den Figuren ist ohne weiteres zu erkennen, dass die Schaltwandlerschaltung 2 ausgangsseitig mit der Messschaltung 3 verbunden ist und die Schaltwandlerschaltung 2 die Messschaltung 3 mit elektrischer Leistung versorgt. Auch hier kommt es nicht entscheidend darauf an, ob die Schaltwandlerschaltung 2 unmittelbar mit der Messschaltung 3 verbunden ist oder mittelbar über weitere elektrische Netzwerke, jedenfalls besteht der funktionale Zusammenhang der leistungsmäßigen Versorgung der Messschaltung 3 durch die Schaltwandlerschaltung 2.

Die Schaltwandlerschaltung 2 ist üblicherweise für einen bestimmten Arbeitspunkt und damit für eine bestimmte ausgangsseitige Leistungsentnahme ausgelegt. Das bedeutet, dass die von einer Schaltwandlerschaltung 2 bzw. von bestimmten schaltenden Teilen der Schaltwandlerschaltung 2 erzeugten und in Richtung auf die Messschaltung 3 wirkenden Störsignale für diesen Arbeitspunkt möglichst optimal unterdrückt sind. Wird von dem Arbeitspunkt abgewichen, entstehen zwangsläufig andersartige, ggf. breitbandigere oder auch nur frequenzmäßig verschobene Störsignale, so dass die Störsignalunterdrückung, die für einen anderen Arbeitspunkt ausgelegt worden ist, nicht mehr vollständig greift.

Bei den dargestellten Feldgeräten 1 ist vorgesehen, dass eine Lastschaltung 5 von einer Laststeuerschaltung 6 so angesteuert ist, dass die ausgangsseitige elektrische Last an der Schaltwandlerschaltung 2 eine elektrische Mindestlast nicht unterschreitet. Durch die beschriebene Ausgestaltung kann verhindert werden, dass die Schaltwandlerschaltung 2 ausgangsseitig mit sehr unterschiedlichen elektrischen Lasten belastet wird und damit sehr unterschiedlich ausgestaltete Störsignale aussendet. Die Schaltwandlerschaltung 2 ist in den dargestellten Ausführungsbeispielen also immer so konfiguriert und optimiert, dass eine Störsignalunterdrückung für eine hohe ausgangsseitige Last vorgesehen ist. Dies trägt insgesamt dem Umstand Rechnung, dass die von der Schaltwandlerschaltung 2 ausgangsseitig entnommene Leistung zwar schaltungstechnisch erhöht werden kann, sich eine von der Messschaltung 3 zu einer korrekten Funktionsweise erforderliche Leistung aber nicht durch eine zusätzliche schaltungstechnische Maßnahme erniedrigen lässt.

Bei dem Ausführungsbeispiel gemäß Fig. 1 ist die Lastschaltung 5 außerhalb der Messschaltung 3 vorgesehen, wohingegen die Laststeuerschaltung 6 innerhalb der Messschaltung 3 realisiert ist. Im Gegensatz dazu zeigt das Ausführungsbeispiel gemäß Fig. 3 sowohl eine Lastschaltung 5 als auch eine Laststeuerschaltung 6, die beide außerhalb der Messschaltung 3 implementiert sind.

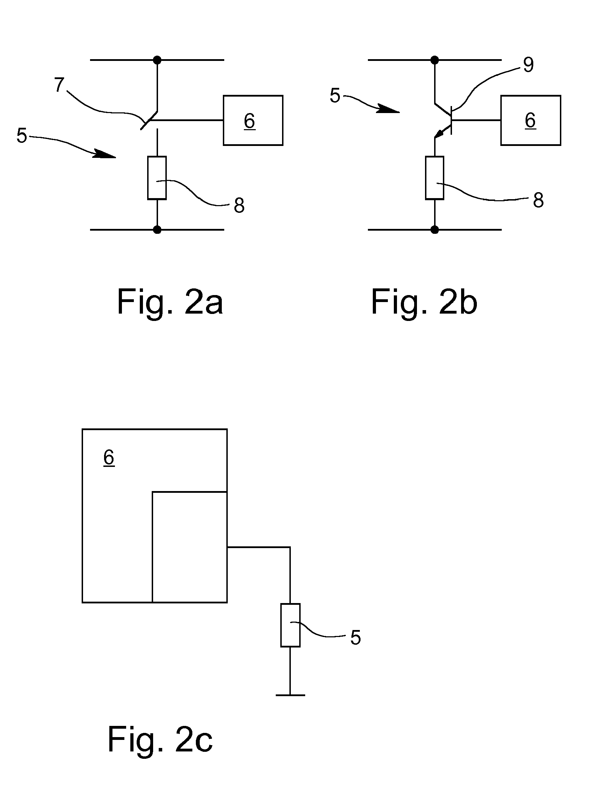

Fig. 2 zeigt verschiedene Varianten der Realisierung einer Lastschaltung 5 und einer Laststeuerschaltung 6. In Fig. 2a ist dargestellt, dass die Lastschaltung 5 aus einem betätigbaren Schalter 7 und einem ohmschen Widerstand 8 besteht. Die Laststeuerschaltung 6 schaltet den Schalter 7 und gibt so einen zusätzlichen Strompfad frei, über den Leistung von der Schaltwandlerschaltung 2 entnommen wird. Bei dem Ausführungsbeispiel in Fig. 2b ist die Lastschaltung 5 durch einen Transistor 9 und einen nachgeschalteten ohmschen Widerstand 8 realisiert. Die Basis des Transistors 9 wird von der Laststeuerschaltung 6 angesteuert. Der Transistor 9 kann als Schalter betrieben werden, es lässt sich mit der derartig realisierten Lastschaltung 5 und der LaststeuerSchaltung 6 aber auch eine kontinuierliche Lastanpassung realisieren, so dass nicht nur eine elektrische Mindestlast eingestellt werden kann, sondern vielmehr tatsächlich eine konstante Last und damit ein konstanter Arbeitspunkt der Schaltwandlerschaltung 2 gewährleistbar ist.

Bei dem Ausführungsbeispiel gemäß Fig. 2c sind die Lastschaltung 5 und die Laststeuerschaltung 6 durch einen Mikrocontroller 6 realisiert, dessen I/O-Ports angesteuert werden und der über die Lastschaltung 5 in Form eines ohmschen Widerstandes einen Strom gegen Masse treibt und so für einen erhöhten Leistungsbedarf sorgt.

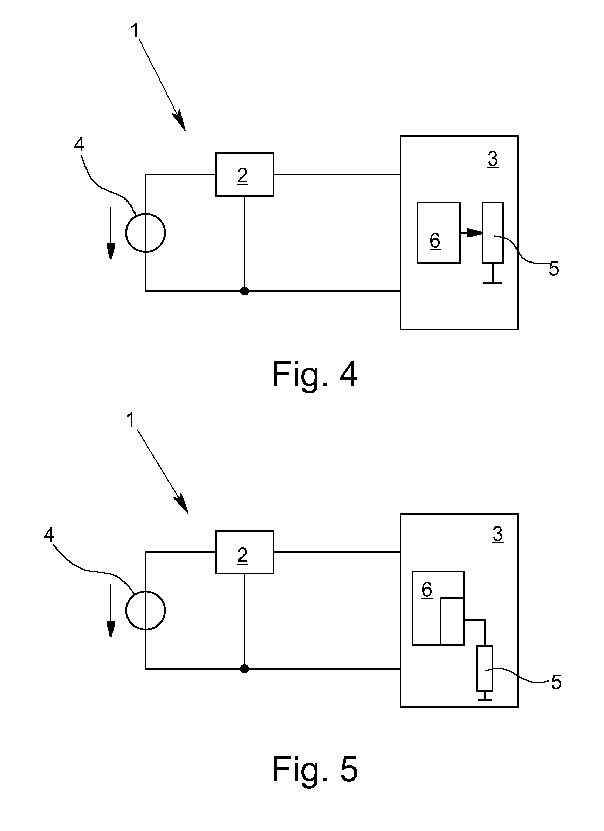

Das Feldgerät 1 gemäß Fig. 4 zeigt eine Lösung, bei der die Lastschaltung 5 und auch die Laststeuerschaltung 6 beide innerhalb der Messschaltung 3 implementiert sind, so dass keine Zusatzmodule erforderlich sind, was den Montageaufwand reduziert.

Fig. 5 zeigt eine konkrete Ausgestaltung der Lösung gemäß Fig. 4. Hier ist die Laststeuerschaltung 6 im Rahmen des schon in der Messschaltung 3 vorhandenen Mikrocontrollers realisiert, wobei die elektrische Leistung durch Ansteuerung eines I/O-Ports des Mikrocontrollers verbraucht wird, wobei im vorliegenden Fall der I/O-Port des Mikrocontrollers durch die Lastschaltung 5 in Form eines ohmschen Widerstandes belastet ist. Es können selbstverständlich auch mehrere I/O-Ports des Mikrocontrollers gleichzeitig beschaltet werden, so dass unterschiedliche elektrische Lasten realisierbar sind. Der Ausgang kann beispielsweise auch nicht nur durch einen digitalen I/O-Port, sondern durch einen analogen Ausgang, also den Ausgang eines integrierten D/A-Wandlers realisiert sein. So lässt sich durch Variation der Ausgangsspannung am I/O-Port des Mikrocontrollers auch die Höhe der zusätzlich verbrauchten Leistung sehr genau einstellen und sehr einfach variieren.

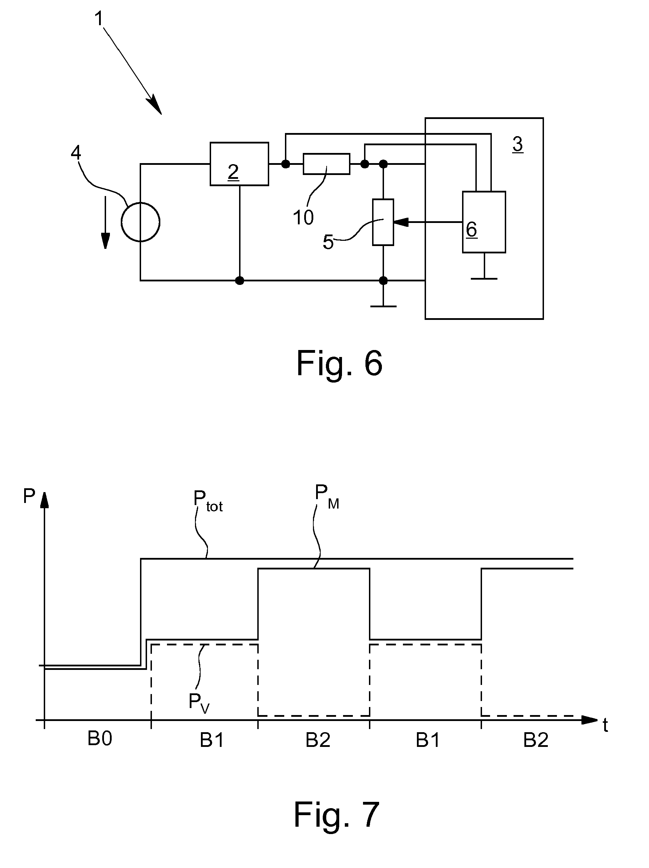

Wenn es auf eine sehr genaue Einstellung der durch die Lastschaltung 5 realisierten elektrischen Last nicht ankommt, wenn beispielsweise nur verhindert werden soll, dass die Schaltwandlerschaltung 2 von dem normalen PWM-Betriebsmodus in den Burst-Betriebsmodus wechselt, dann können die Lastschaltung 5 und die Laststeuerschaltung 6 beispielsweise nur in Abhängigkeit von einem Betriebsmodus der Messschaltung 3 geschaltet werden. Eine solche Art des Einsatzes ist in Fig. 7 dargestellt.

In Fig. 7 wird davon ausgegangen, dass das Feldgerät 1 verschiedene Betriebsmodi aufweist, die mit B0, B1, und B2 bezeichnet sind. Bei dem Betriebsmodus B0 handelt es sich um den Betriebsmodus zum Hochfahren des Feldgeräts, bei dem Betriebsmodus B1 um einen ersten Betriebsmodus und bei dem Modus B2 um einen zweiten Betriebsmodus. Die mit P_{M} bezeichnete Kurve stellt die Leistungsaufnahme der Messschaltung 3 dar. Es ist unschwer zu erkennen, dass eine besonders hohe Leistungsaufnahme in dem zweiten Betriebsmodus B2 vorhanden ist, wohingegen im ersten Betriebsmodus B1 eine deutlich geringere Leistungsaufnahme durch die Messschaltung 3 vorliegt.

Im vorliegenden Fall steuert die Laststeuerschaltung 6 die Lastschaltung 5 im ersten Betriebsmodus B1 an, wodurch die zusätzliche Leistung P_{V} verbraucht wird. Im zweiten Betriebsmodus B2 wird hingegen wird die Lastschaltung 5 von der Laststeuerschaltung 6 nicht angesteuert, so dass der zusätzliche Leistungsbedarf P_{V} durch die Lastschaltung 5 auf Null absinkt. Durch die beschriebene Schaltung und durch den beschriebenen Einsatz der Lastschaltung 5 und der Laststeuerschaltung 6 wird erreicht, dass die Leistungsaufnahme von Messschaltung 3 und Lastschaltung 5 praktisch gleichbleibend der Gesamtlast Pₜₒₜ entspricht, so dass die ausgangsseitige elektrische Last an der Schaltwandlerschaltung 2 eine elektrische Mindestlast nicht unterschreitet.

Bei dem in Fig. 7 dargestellten Beispiel handelt es sich um den Betrieb eines als Radarmessgerät ausgestaltetes Feldgeräts 1, das der Entfernungsmessung dient. Der erste Betriebsmodus B1 dient zum Emittieren und Empfangen von HF-Strahlung sowie zum Digitalisieren und Abspeichern der emittierten und empfangenen HF-Strahlung. Der zweite Betriebsmodus B2 dient zur Auswertung der abgespeicherten digitalisierten emittierten und empfangenen HF-Strahlung, wobei die erforderliche elektrische Leistung zur Durchführung des zweiten Betriebsmodus B2 höher ist als die erforderliche Leistung zur Ausführung des ersten Betriebsmodus B1.

In Fig. 6 ist ein Ausführungsbeispiel eines Feldgeräts 1 dargestellt, bei dem die Lastschaltung 5 und die Laststeuerschaltung 6 insgesamt regelnd betrieben werden. Über einen Strommesswiderstand 10 wird der aus der Schaltwandlerschaltung 2 entnommene Strom gemessen, genauso wie die Spannung am Ausgang der Schaltwandlerschaltung 2. Durch die Erfassung dieser beiden elektrischen Kenngrößen durch die Laststeuerschaltung 6 wird die tatsächliche entnommene elektrische Leistung und damit die elektrische Last an der Schaltwandlerschaltung 2 ermittelt. In Abhängigkeit von der ermittelten elektrischen Last wird dann die Lastschaltung 5 von der Laststeuerschaltung 6 angesteuert, so dass praktisch kontinuierlich für eine gleichmäßige elektrische Belastung der Schaltwandlerschaltung 2 gesorgt werden kann.

## Patentansprüche

1. Feldgerät (1) mit einer Schaltwandlerschaltung (2) und mit einer Messschaltung (3) zur Bestimmung mindestens einer Messgröße, wobei die Schaltwandlerschaltung (2) eingangsseitig mit elektrischer Leistung gespeist ist und die Schaltwandlerschaltung (2) ausgangsseitig mit der Messschaltung (3) verbunden ist und die Schaltwandlerschaltung (2) die Messschaltung (3) mit elektrischer Leistung versorgt,
**dadurch gekennzeichnet,**
**dass** eine Lastschaltung (5) von einer Laststeuerschaltung (6) so angesteuert ist, dass die ausgangsseitige elektrische Last an der Schaltwandlerschaltung (2) eine elektrische Mindestlast nicht unterschreitet.

2. Feldgerät (1) nach Anspruch 1, **dadurch gekennzeichnet, dass** die elektrische Mindestlast so groß ist, dass die Schaltwandlerschaltung (2) durchgehend im PWM-Betriebsmodus arbeitet, insbesondere ein Burst-Betriebsmodus der Schaltwandlerschaltung (2) vermieden wird.

3. Feldgerät (1) nach Anspruch 1 oder 2, **dadurch gekennzeichnet, dass** die elektrische Mindestlast der maximalen Last der Messschaltung (3) entspricht, insbesondere der maximalen Last der Messschaltung (3) im Normmessbetrieb.

4. Feldgerät (1) nach einem der Ansprüche 1 bis 3, **dadurch gekennzeichnet, dass** die Lastschaltung (5) parallel zur Messschaltung (3) geschaltet ist oder die Lastschaltung (5) als Teil der Messschaltung (3) realisiert ist.

5. Feldgerät (1) nach einem der Ansprüche 1 bis 4, **dadurch gekennzeichnet, dass** die Lastschaltung wenigstens einen Transistor umfasst, wobei der Transistor von der Laststeuerschaltung angesteuert ist.

6. Feldgerät (1) nach einem der Ansprüche 1 bis 4, **dadurch gekennzeichnet, dass** die Lastschaltung (5) und die Laststeuerschaltung (6) durch wenigstens einen Mikrocontroller realisiert sind, wobei elektrische Leistung durch Ansteuerung wenigstens eines I/O-Ports des Mikrocontrollers verbraucht wird, insbesondere durch treiben eines Stroms über einen elektrischen Widerstand (8) gegen Masse.

7. Feldgerät (1) nach einem der Ansprüche 1 bis 6, **dadurch gekennzeichnet, dass** die Laststeuerschaltung (6) die Lastschaltung (5) in Abhängigkeit von einem Betriebsmodus der Messschaltung (3) ansteuert.

8. Feldgerät (1) nach Anspruch 7, **dadurch gekennzeichnet, dass** das Feldgerät (1) ein Radarmessgerät zur Entfernungsmessung ist und wenigstens einen ersten Betriebsmodus (B1) zum Emittieren und Empfangen von HF-Strahlung sowie zum Digitalisieren und Abspeichern der emittierten und empfangenen HF-Strahlung aufweist und wenigstens einen zweiten Betriebsmodus (B2) zur Auswertung der abgespeicherten digitalisierten emittierten und empfangenen HF-Strahlung aufweist, wobei die Laststeuerschaltung (6) die Lastschaltung (5) im ersten Betriebsmodus (B1) ansteuert.

9. Feldgerät (1) nach einem der Ansprüche 1 bis 8, **dadurch gekennzeichnet, dass** die ausgangsseitige elektrische Last an der Schaltwandlerschaltung (2) durch Erfassung wenigstens einer elektrischen Kenngröße von der Laststeuerschaltung (6) ermittelt wird und in Abhängigkeit von der ermittelten elektrischen Last die Lastschaltung (5) von der Laststeuerschaltung (6) angesteuert wird, insbesondere wobei die wenigstens eine elektrische Kenngröße der von der Schaltwandlerschaltung (2) insgesamt getriebene ausgangsseitige Strom ist.
